(19) **Europäisches Patentamt**

**European Patent Office**

**Office européen des brevets**

(11) **EP 0 992 961 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(51) Int Cl.⁷: **G08B 5/38**, B61L 5/18, G08G 1/095, H05B 33/08

(21) Anmeldenummer: **99250352.4**

(22) Anmeldetag: **05.10.1999**

(54) **Schaltungsanordnung zum Betreiben eines Leuchtzeichens**

Circuit for operating an illuminated sign

Circuit d'opération d'un panneau lumineux

(84) Benannte Vertragsstaaten:
**AT CH DE GB LI**

(30) Priorität: **07.10.1998 DE 19846753**

(43) Veröffentlichungstag der Anmeldung:
**12.04.2000 Patentblatt 2000/15**

(73) Patentinhaber: **SIEMENS AKTIENGESELLSCHAFT**
**80333 München (DE)**

(72) Erfinder:
- **Zimmermann, Dirk**
  **13053 Berlin (DE)**
- **Zabel, Michael**
  **12679 Berlin (DE)**
- **Köster, Kay**
  **10409 Berlin (DE)**

(56) Entgegenhaltungen:
**DE-A- 19 802 895**      **US-A- 4 743 897**
**US-A- 5 406 172**

**Beschreibung**

Die Erfindung betrifft eine Schaltungsanordnung zum Betreiben eines Leuchtzeichens entsprechend dem Oberbegriff des Anspruchs 1.

Leuchtzeichen wie herkömmliche Lichtsignalanlagen in der Verkehrstechnik sind mit Glühlampen ausgerüstet, die eine unbefriedigende Lebensdauer aufweisen und dadurch einen hohen Wartungsaufwand bei den Leuchtzeichen erfordern. Eine Abänderung kann mit Leuchtdioden, deren Lebensdauer wesentlich höher liegt, erreicht werden.

Lichtemittierende Dioden (LED) haben einen technischen Stand erreicht, der sie für Verwendungen interessant macht, welche bisher ausschließlich den herkömmlichen Glühlampen vorbehalten waren. Beim Austausch einer Glühlampe durch eine Anzahl von Leuchtdioden (LED) ist jedoch deren unterschiedliches Kennlinienverhalten zu beachten. Bei Neuanlagen kann die Ansteuerschaltung ohne Probleme direkt auf die Belange der LED abgestimmt werden. Bei einem Austausch, bei dem die vorhandene Anschalteinrichtung nicht verändert werden soll, ist eine Kennlinienanpassung mittels einer dazwischengeschalteten Elektronik erforderlich.

Bei den herkömmlichen Lichtsignalen in der Verkehrstechnik gibt es u.a. verschiedene Helligkeitsstufen für den Tag- und für den Nachtbetrieb. Bei der Speisung von Verkehrssignalen der Eisenbahn über Entfernungen von mehreren Kilometern besteht die Gefahr der Einkopplung von Störsignalen, die beim Einsatz von LED kritisch werden könnten, da diese schon bei einer äußerst geringen Leistung leuchten. Bei herkömmlichen Glühlampen ist dazu eine um mehrere Größenordnungen höhere Leistung erforderlich. Um die Vorteile der höheren Lebensdauer von LED gegenüber der Lebensdauer von Glühlampen nutzen zu können, ist eine zuverlässige Störsignalunterdrückung notwendig. Die LED müssen außerdem so zusammengeschaltet sein, daß Ausfälle einzelner LED nicht zum Ausfall des gesamten Systems führen, um den hohen Sicherheitsanforderungen in der Verkehrstechnik gerecht zu werden.

Aus der WO 95/12512 sowie der US 4,743,897 ist eine Schaltungsanordnung zur Abgabe von optischen Signalen bekannt, die in der Verkehrstechnik einsetzbar ist und bei der Leuchtdioden als Signallampen zur Anwendung kommen. Dabei sind mehrere Leuchtdioden zu einem Funktionsblock in Reihe geschaltet, der die Speisung und Überwachung der betreffenden Leuchtdioden übernimmt und somit den Strom der LED eines Blockes steuert und damit die Leuchtstärke den jeweiligen Bedingungen anpaßt. Mit Hilfe einer Überwachungseinheit werden die LED eines Blockes auf Unterbrechung überwacht. Wenn ein Fehler erkannt wird, dann erfolgt dazu eine Meldung.

Nachteilig ist die Reihenschaltung der LED eines Blockes, die bei einer Unterbrechung nur einer LED zum Ausfall der LED des Blockes führt. Weiterhin ist die vorgesehene Überwachungseinheit nicht in der Lage, alle auftretenden Fehler zu erkennen, z.B. einen LED-Kurzschluß, oder zu erkennen, wenn eine LED trotz Stromfluß nicht leuchtet. Die Verfügbarkeit des LED-Signals ist zudem stark eingeschränkt.

Ein weiterer Nachteil besteht darin, daß das Signal bei Einkopplung von Fremdenergie (kapazitiv eingekoppelt wegen hoher Stellentfernung) zu leuchten beginnt bzw. zum Schwingen neigt.

Um diese Nachteile zu beseitigen, ist gemäß der DE 198 02 895 A1 eine Parallelschaltung der LEDs vorgesehen, wobei das Leuchtzeichen aus mindestens zwei voneinander unabhängigen gleichen Einheiten besteht, die aus jeweils mindestens einer Leuchtdiode und einer jeweils mindestens einer Leuchtdiode zugeordneten individuellen Ansteuerschaltung besteht. Die Unterteilung des Leuchtzeichens in n gleiche Einheiten von Leuchtdioden (LED), wobei bei $n_x$ defekten Einheiten das Signal unter der Voraussetzung $n_x \ll n$ noch funktionstüchtig ist, ergibt eine hohe Verfügbarkeit des Leuchtzeichens. Die Einheiten sind voneinander unabhängig, so daß ein Fehler, der in einer der Einheiten auftritt, nicht zu einem Fehler in einer anderen Einheit führen kann. Ein Kurzschluß in einer der Einheiten führt z. B. nicht dazu, daß die Leuchtfähigkeit einer Leuchtdiode einer anderen Einheit eingeschränkt wird. Durch die Ansteuerung jeder Leuchtdiode durch eine eigene Ansteuerschaltung, mit der die Betriebszustände Kaltzustand, Zustand Tagbetrieb, Zustand Nachtbetrieb erzielt werden können, ist es möglich, die Kennlinien der in das Leuchtzeichen eingesetzten Leuchtdioden der Kennlinie einer Glühlampe in den einzelnen Betriebszuständen anzunähern. Jede Einzelansteuerung realisiert für die betreffende Leuchtdiode das gewünschte Kennlinienverhalten. Das Kennlinienverhalten des gesamten Leuchtzeichens wird durch die Summe der Kennlinienverhalten der Einzeldioden (Einzelansteuerungen) bestimmt. Durch den Ausfall einer Einzelansteuerung ändert sich das Kennlinienverhalten des gesamten Leuchtzeichens nur sehr wenig. Erst ab dem Ausfall einer Vielzahl von Einzelansteuerungen (Leuchtdioden) muß mit einer grundlegenden Änderung des Kennlinienverhaltens des ganzen Leuchtzeichens gerechnet werden.

Die kritische Grenze ist durch die Anzahl der eingesetzten Leuchtdioden bestimmt.

Aufgabe der Erfindung ist es, eine gattungsgemäße Schaltungsanordnung anzugehen, mit der ein hochverfügbares Leuchtzeichen, insbesondere ein aus LED gebildetes Signal für die Verkehrstechnik, bereitgestellt werden kann, welches seine Helligkeit der jeweiligen Ansteuerung anpaßt und welches Störsignale unterdrückt, die bei einer Ansteuerung über eine größere Entfernung eingekoppelt werden können, so daß Glühlampen eines herkömmlichen Leuchtzeichens zuverlässig und ausfallsicher durch Leuchtdioden auch ohne Veränderung einer vorhandenen Anschalteinrichtung austauschbar sind.

Die Aufgabe wird mit den Merkmalen des Anspruches 1 gelöst.

Das nach der Erfindung aufgebaute Leuchtzeichen gewährleistet eine hohe Sicherheit gegen Ausfälle.

Die Spannung, bei der das Leuchtzeichen zu leuchten beginnt, läßt sich frei bestimmen. Im Spannungsbereich darunter verhält sich das Leuchtzeichen durch die Parallelschaltung eines Shuntwiderstandes zur Leuchtdiode wie ein niederohmiger Widerstand. Der durch den Widerstand fließende Strom erzeugt einen Spannungsabfall, der in diesem Zustand immer kleiner als die Flußspannung der Leuchtdiode bleibt. Somit bleibt das Leuchtzeichen dunkel.

Wenn das Leuchtzeichen zu leuchten beginnt, dann sorgt der Shuntwiderstand für eine Stromteilung. Ein Teil des Stromes fließt durch die Leuchtdiode, der andere Teil fließt durch den Shuntwiderstand. Zu dem Shuntwiderstand ist eine Schaltstrecke in Serie geschaltet, welche bis zu einer festlegbaren Eingangsspannung (Speisespannung) geschlossen ist und erst ab dieser öffnet.

Nach Öffnung fließt der gesamte Strom durch die Leuchtdiode, so daß eine deutliche Steigerung der Lichtstärke erzielt wird. Dadurch kann das lichttechnische Verhalten dem einer Glühlampe angenähert werden.

Eine zweckmäßige Ausführungsform der Schaltungsanordnung für Wechselstrombetrieb ist in Anspruch 2 beschrieben.

Die Erfindung wird nachfolgend anhand einer Zeichnung in zwei Ausführungsbeispielen für den Gleichspannungs- und Wechselspannungsbetrieb eines LED-Signals näher erläutert. Es zeigen:

Fig. 1    die Prinzipdarstellung eines LED-Signals mit hoher Verfügbarkeit,

Fig. 2    die Prinzipdarstellung eines LED-Signals für Gleichspannungsbetrieb,

Fig. 3    die Prinzipdarstellung einer Einzelansteuerung des LED-Signals nach Fig. 2,

Fig. 4    die Prinzipdarstellung eines LED-Signals für Wechselspannungsspeisung,

Fig. 5    die grafische Darstellung der Lichtstärke in Abhängigkeit von der Spannung und

Fig. 6    die grafische Darstellung des Klemmenwiderstandes in Abhängigkeit von der Spannung.

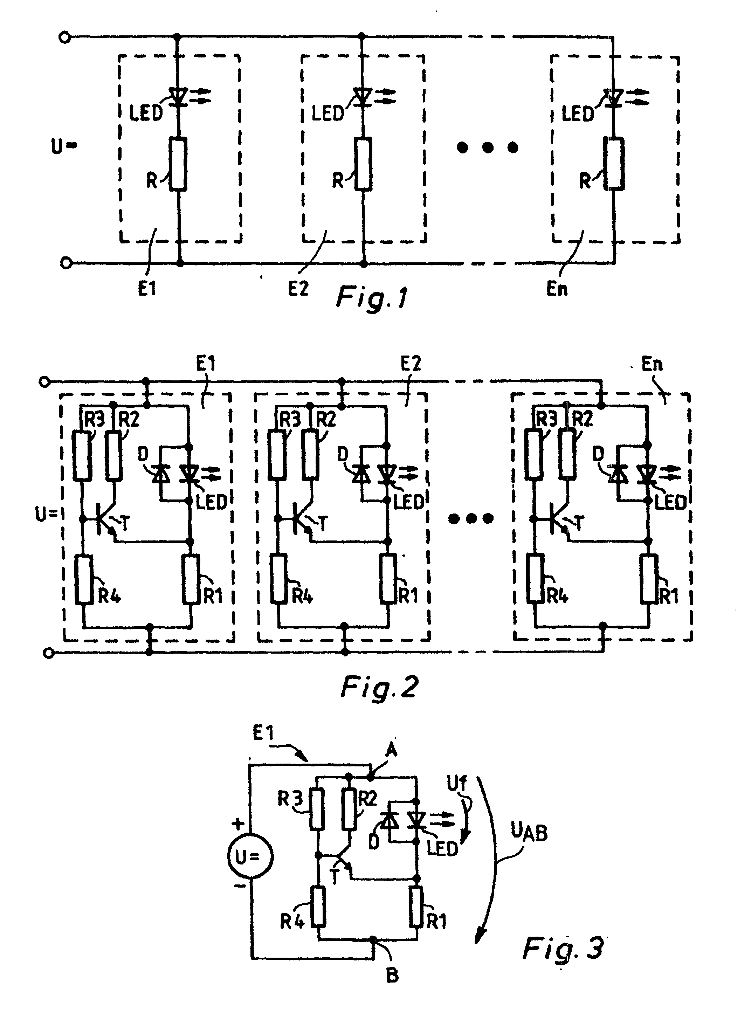

In der Fig. 1 ist die Zusammenschaltung von Leuchtdioden LED mit jeweils einem Vorwiderstand R zu einer Anzahl von Einheiten E1, E2 bis En gezeigt, mit der eine hohe Verfügbarkeit des Leuchtzeichens erreicht werden kann. Die einzelnen Einheiten E1 bis En sind an die Betriebsspannung U= angeschlossen. Diese Form der Schaltung ist zweckmäßig anwendbar, wenn keine Störspannungsunterdrückung notwendig erscheint, weil z.B. die Speisung über kurze Distanzen erfolgt, und wenn eine Helligkeitsanpassung nur beschränktbenötigt wird. Die Adaptierung an vorhandene Schnittstellen, z.B. beim Austausch gegen ein Leuchtzeichen mit Glühlampen, ist nur eingeschränkt möglich.

Die Fig. 2 zeigt eine Ausführungsform einer Schaltungsanordnung nach der Erfindung für ein Leuchtzeichen mit Leuchtdioden LED mit Gleichspannungsspeisung U= (LED-Signal), bei dem frei bestimmbar ist, bei welcher Spannung das Signal zu leuchten beginnt. Im Spannungsbereich darunter verhält sich das Signal wie ein niederohmiger Widerstand.

Um eine hohe Verfügbarkeit des LED-Signals zu erreichen, wird das LED-Signal, wie auch bereits in der Fig. 1 dargestellt, in n gleiche Einheiten E1, E2 bis En unterteilt, wobei die Anzahl der eingesetzten Leuchtdioden LED $n_{max}$ beträgt. Es wird davon ausgegangen, daß während der Lebensdauer des Signals maximal x-Einheiten E1 bis En nicht mehr funktionsfähig sind, wobei x << n, und daß das Signal, wenn x-Einheiten E1 bis En defekt sind, immer noch funktionstüchtig ist, d.h., die Leuchtstärke des LED-Signals insgesamt ist noch ausreichend. Diese Betrachtung ist zulässig, wenn die Einheiten E1 bis En als voneinander unabhängig angesehen werden können. Dabei bedeutet in diesem Zusammenhang Unabhängigkeit u.a., daß ein Fehler, welcher in einer der Einheiten E1 bis En auftritt, nicht zu einem Fehler in einer anderen Einheit E1 bis En führen kann. Ein Kurzschluß in einer Einheit E1 bis En darf z.B. nicht dazu führen, daß die Leuchtfähigkeit einer Leuchtdiode LED einer anderen Einheit E1 bis En eingeschränkt wird.

Um diese Unabhängigkeit zu erreichen, wird jede Leuchtdiode LED von einer eigenen Ansteuerschaltung angesteuert.

Die Auslegung der Einzelansteuerungen und die für die Einzelansteuerungen eingesetzten Bauelemente mit ihrem definierten Ausfallverhalten gewährleisten eine hohe Sicherheit und Zuverlässigkeit des LED-Signals.

Jede Ansteuerschaltung realisiert für die entsprechende Leuchtdiode LED das gewünschte Kennlinienverhalten. Das Kennlinienverhalten des gesamten LED-Signals wird durch die Summe der Kennlinienverhalten der einzelnen Ansteuerschaltungen bestimmt. Durch den Ausfall einer Ansteuerschaltung ändert sich das Kennlinienverhalten des Signals nur sehr wenig. Erst ab dem Ausfall einer Vielzahl von einzelnen Ansteuerschaltungen muß mit einer grundlegenden Änderung des Kennlinienverhaltens des ganzen Signals gerechnet werden.

Entsprechend der Darstellung in der Fig. 2 besteht eine Einheit E1 bis En mindestens aus einer Leuchtdiode LED, aus vier Widerständen R1 bis R4, einem Transistor T und einer Schutzdiode D.

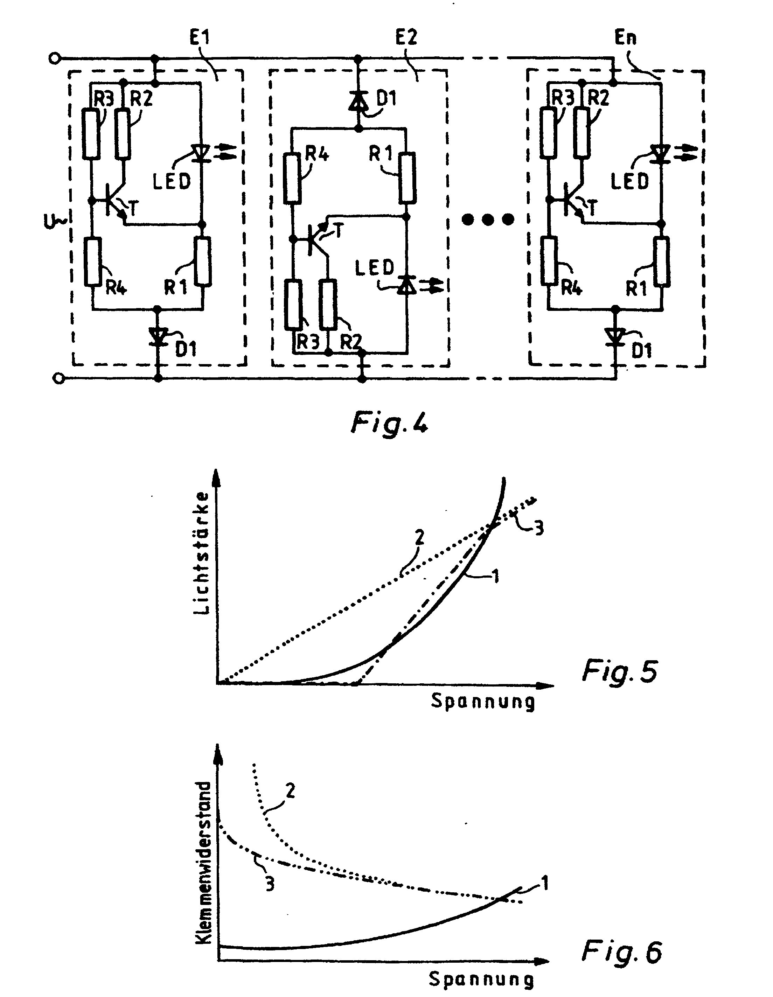

In der Fig. 3 ist eine Einheit E1 eines LED-Signals dargestellt, anhand der die Funktionsweise der Ansteuerschaltungen erläutert wird.

Die Ansteuerschaltung der Einheit E1 kann grundsätzlich in drei Betriebszuständen arbeiten.

Im Kaltzustand (Zustand 1), das Signal ist dunkel, liegt an den Punkten A und B eine Gleichspannung $U_{AB}$ an, die kleiner als die Spannung ist, bei der das Signal zu leuchten beginnt. Die Widerstände R3, R4 sind so dimensioniert, daß die Basis des Transistors T in diesem Zustand immer positiver als der Emitter ist. Dadurch ist der Transistor T leitend, wodurch der Widerstand R2 parallel zur Leuchtdiode LED gelegt ist. Die Widerstände R3, R4 sind vorzugsweise wesentlich hochohmiger als die Widerstände R1, R2 gewählt, so daß der sich einsteilende Strom vorrangig durch die Summe der Widerstände R1, R2 bestimmt wird. Über den Widerstand R2 fällt eine Spannung ab, die in diesem Zustand immer kleiner als die Flußspannung Uf der Leuchtdiode LED ist. Die Leuchtdiode LED bleibt dunkel. Die Anordnung verhält sich auf Grund des Stromflusses niederohmig. Dieser Zustand bildet den Kaltzustand einer herkömmlichen Glühlampe nach.

Der zweite Zustand der Ansteuerschaltung entspricht dem Zustand der Nachtabsenkung bei einem Leuchtzeichen mit herkömmlicher Glühlampe. Das Leuchtzeichen hat eine geringere Leuchtkraft als am Tage.

Mit steigender Spannung U= erhöht sich der Strom durch die Widerstände R1 und R2 und somit auch der Spannungsabfall über dem Widerstand R2. Wenn der Spannungsabfall über dem Widerstand R2 die Flußspannung Uf der Leuchtdiode LED erreicht, dann beginnt die Leuchtdiode LED zu leuchten. In diesem Zustand tritt eine Stromteilung auf. Ein Teil des Stromes fließt über den Widerstand R2, ein anderer Teil über die Leuchtdiode LED. Aufgrund der Stromteilung ist die Leuchtstärke der Leuchtdiode LED kleiner, als wenn der gesamte Strom durch die Leuchtdiode LED fließen würde.

Wenn die Spannung an den Punkte A, B weiter ansteigt, dann wird die Basis des Transistors T negativer als der Emitter, weil der Emitter direkt mit der Katode der Leuchtdiode LED verbunden ist und diese Spannung um eine feste Größe, die Flußspannung Uf der Leuchtdiode LED, negativer als der Punkt A ist. Die Spannung an der Basis des Transistors T wird dagegen direkt von der Spannung $U_{AB}$ abgeleitet. Ab einer Spannungsgröße von

$$U_{AB} \approx U_{R3} \times \frac{R3 + R4}{R3} = Uf * \frac{R3 + R4}{R3}$$

sperrt der Transistor und der gesamte Strom fließt über die Leuchtdiode LED. Der Strom über die Leuchtdiode LED wird ausschließlich durch den Widerstand R1 bestimmt. Die Leuchtdiode LED leuchtet mit ihrer vollen Helligkeit. Dieser Zustand entspricht dem Tagbetrieb bei einem Leuchtzeichen mit herkömmlicher Glühlampe.

Die Kennlinie der Anordnung nach der Fig. 2, also eines LED-Signals, läßt sich der Kennlinie einer Glühlampe annähern.

In der Fig. 5 ist die Lichtstärke in Abhängigkeit von der Spannung für eine herkömmliche Glühlampe (Kennlinie 1), einer Anordnung nach Fig. 1 (Kennlinie 2) und einer Anordnung nach Fig. 2 (Kennlinie 3) gezeigt.

Im ansteigenden Bereich der Kennlinien 1, 2, 3 läßt sich mit der Anordnung nach Fig. 2 eine gute Übereinstimmung erzielen. Mit dem Verhältnis der Widerstände R1 und R2 wird die Spannung festgelegt, bei der das Signal zu leuchten beginnt. Mit dem Widerstandsverhältnis der Widerstände R3 und R4 kann der Punkt der Kennlinie 3 festgelegt werden, ab dem der gesamte Strom durch die Leuchtdiode LED fließt. Die Anordnung nach Fig. 2 verhält sich ab diesem Punkt genau wie die Anordnung nach Fig. 1.

Die Fig. 6 zeigt die zugehörigen Klemmwiderstands-Spannungskennlinien. Daraus ist deutlich zu erkennen, daß eine Glühlampe im Kaltzustand einen sehr kleinen Widerstand besitzt, welcher mit steigender Spannung exponentiell ansteigt. Die Anordnung nach Fig. 1 besitzt dagegen bei kleiner Spannung einen sehr hohen Widerstand. Dieser hochohmige Zustand macht diese Schaltung anfällig gegenüber Störsignalen. Dagegen besitzt die Anordnung nach den Fig. 2, 3 auch im Bereich kleiner Spannungen einen niedrigen Widerstand, wodurch die Anfälligkeit gegenüber Störsignalen wesentlich geringer ist.

Dieser Widerstand wird vorwiegend durch die Summe der Widerstände R1 und R2 bestimmt.

Es kommen bei den Ansteuerungen solche Widerstände zur Anwendung, die ein definiertes Ausfallverhalten aufweisen, auch Widerstände in Sicherheitsbauform genannt. Bei diesen Widerständen braucht nicht mit einem Kurzschluß gerechnet zu werden. Ein Kurzschluß einer Leuchtdiode LED würde dazu führen, daß sich die Gesamtstromaufnahme der Anordnung nur geringfügig erhöht, welches aber keinen Einfluß auf die Leuchtfähigkeit der übrigen Leuchtdioden LED hat.

In der Fig. 4 ist die Speisung des Leuchtdioden-Signals mit Wechselspannung U gezeigt. Die Schutzdiode D kann hier entfallen. Dafür ist die Anordnung einer zusätzlichen Gleichrichterdiode D1 sinnvoll, welche dafür sorgt, daß der Strom in einer Einheit E1 bis En nur in einer Richtung fließt.

Die Schaltung nach der Erfindung wird mit einer platzsparenden Technologie wie SMD-Technik aufgebaut. Es ist aber auch vorstellbar, daß die für die Ansteuerung einer Leuchtdiode LED notwendigen Bauelemente entsprechend der Darstellung in der Fig. 3 in Hybridtechnik in einem Gehäuse untergebracht werden und ausschließlich die beiden Anschlüsse A, B für die Spannungszuführung nach außen geführt werden. Es ist auch möglich, daß die Bauelemente zur Ansteuerung der Leuchtdiode LED in das Halbleitermaterial der Leuchtdiode LED eingebracht werden, so daß eine äußerst kompakte Bauform entsteht.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

**Patentansprüche**

1. Schaltungsanordnung zum Betreiben eines Leuchtzeichens, insbesondere eines LED-Signals, mit mindestens einer Leuchtdiode, zu der ein Widerstand in Reihe und eine Schaltstrecke eines elektronischen Schalters parallel geschaltet sind, wobei das Leuchtzeichen aus mindestens zwei voneinander unabhängigen gleichen Einheiten (E1,E2,En), bestehend aus jeweils mindestens einer Leuchtdiode (LED) und aus einer jeweils mindestens einer Leuchtdiode (LED) zugeordneten Ansteuerschaltung (R1 bis R4, D, T), gebildet ist,
**dadurch gekennzeichnet**
**daß** zum Betrieb mit Gleichspannung (U=) in jeder Einheit (E1 bis En) mindestens eine Leuchtdiode (LED) mit einer Schutzdiode (D) beschaltet ist und einer der Leuchtdioden-Anschlüsse direkt mit dem Emitter eines elektronischen Schalters (T) und mit einem ersten Widerstand (R1) und der andere Leuchtdioden-Anschluß mit dem einen Eingangspunkt (A) der Speisespannung (U=) und der Parallelschaltung von einem zweiten und dritten Widerstand (R2, R3) verbunden ist, wobei der weitere Anschluß des zweiten Widerstandes (R2) mit dem Kollektor des elektronischen Schalters (T) und der weitere Anschluß des dritten Widerstandes (R3) mit der Basis des elektronischen Schalters (T) verbunden sind, wobei ein in Reihe mit dem dritten Widerstand (R3) angeordneter vierter Widerstand (R4) mit dem anderen Eingangspunkt (B) der Speisespannung (U=) und über diesen mit dem anderen Anschluß des ersten Widerstandes (R1) verbunden ist, so daß beim Anlegen einer Gleichspannung (U=) an die Eingangspunkte (A, B) der Speisespannung (U=), bei der die Basis des elektronischen Schalters (T) immer positiver als der Emitter ist und der elektronische Schalter (T) leitet, so daß der zweite Widerstand (R2) als Shuntwiderstand zur Leuchtdiode (LED) parallel liegt und über diesen zweiten Widerstand (R2) eine Spannung abfällt, die immer kleiner als die Flußspannung (Uf) der Leuchtdiode (LED) ist, und wobei mit steigender Speisespannung (U=) sich der Strom durch den ersten und zweiten Widerstand (R1, R2) erhöht und somit der Spannungsabfall über den zweiten Widerstand (R2) die Größe der Flußspannung (Uf) der Leuchtdiode (LED) erreicht und somit die Leuchtdiode zu leuchten beginnt, wobei eine Stromteilung über den zweiten Widerstand (R2) und die Leuchtdiode (LED) erfolgt und die Leuchtstärke der Leuchtdiode (LED) abgesenkt ist, und wobei mit weiter steigender Speisespannung (U=) die Basis des elektronischen Schalters (T) negativer als der Emitter wird und der elektronische Schalter (T) sperrt und die Leuchtdiode (LED) mit voller Helligkeit leuchtet.

2. Schaltungsanordnung nach Anspruch 1,
**dadurch gekennzeichnet**
**daß** zum Betrieb mit Wechselspannung eine zusätzliche Gleichrichterdiode (D1) an eine der Zuleitungen zur Speisespannung angeordnet ist, welche den Stromfluß jeder Einheit (E1 bis En) nur in eine Richtung zuläßt.

**Claims**

1. Circuit arrangement for operation of an illuminated sign, in particular an LED signal, having at least one light-emitting diode, in series with which a resistor is connected and in parallel with which a switching path of an electronic switch is connected, with the illuminated sign being formed from at least two mutually independent identical units (E1, E2, En), each comprising at least one light-emitting diode (LED) and a drive circuit (R1 to R4, D, T) which is in each case associated with at least one light-emitting diode (LED),
**characterized**
**in that**, for operation using a DC voltage (U=), at least one light-emitting diode (LED) with a protection diode (D) is connected in each unit (E1 to En) and one of the light-emitting diode connections is connected directly to the emitter of an electronic switch (T2) and to a first resistor (R1), and the other light-emitting diode connection is connected to one input point (A) of the supply voltage (U=) and to a second and a third resistor (R2, R3) which are connected in parallel, with the further connection of the second resistor (R2) being connected to the collector of the electronic switch (T), and the further connection of the third resistor (R3) being connected to the base of the electronic switch (T), with a fourth resistor (R4.), which, is arranged in series with the third resistor (R3), being connected to the other input point (B) of the supply voltage (U=) and, via this, to the other connection of the first resistor (R1) so that, when a DC voltage (U ). is applied to the input points (A, B) of the supply voltage (U=) at which the base of the electronic switch. (T) is always more positive than the emitter and the electronic switch (T) switches on, so that the second resistor (R2) is connected in parallel with the light-emitting diode (LED) as a shunt resistor, and a voltage is dropped across this second resistor (R2) which is always less than the forward voltage (Uf) of the light-emitting diode (LED) , and with the current through the first and second resistors (R1, R2) increasing as the supply voltage (U=) rises so that the voltage drop across the second resistor (R2). reaches the magnitude of the forward voltage (Uf) of the light-emitting diode (LED), and the light-emitting diode thus starts to illuminate, with the current being split between the second resistor (R2) and the light-emitting diode (LED), and the light intensity of the light-emitting diode (LED.) being reduced, and, as the supply voltage (U=) rises further, with the base of the electronic switch (T) becoming more negative than the emitter and the electronic switch (T) switching off, and the light-emitting diode (LED) illuminating with full brightness.

2. Circuit arrangement according to Claim 1, **characterized in that**, for operation with AC voltage, an additional rectifier diode (D1) is connected to one of the supply lines to the supply voltage and allows current to flow in only one direction to each unit (E1 to En).

## Revendications

1. Circuit pour faire fonctionner un panneau lumineux, notamment un signal à LED, comprenant au moins une diode luminescente par rapport à laquelle une résistance est branchée en série et une section de commutation d'un interrupteur électronique est branchée en parallèle, le panneau lumineux étant formé d'au moins deux unités identiques (E1, E2, En) qui sont indépendantes l'une de l'autre et qui sont constituées chacune d'au moins une diode luminescente (LED) et d'un circuit de commande (R1 à R4, D, T) associé à au moins une diode luminescente (LED),

**caractérisé par le fait que**, pour le fonctionnement avec une tension continue (U =), il est branché dans chaque unité (E1 à En) au moins une diode luminescente (LED) avec une diode de protection (D) et l'une des bornes de diode luminescente est reliée directement à l'émetteur d'un interrupteur électronique (T) et à une première résistance (R1) tandis que l'autre borne de diode luminescente est reliée à un point d'entrée (A) de la tension d'alimentation (U =) et au branchement en parallèle d'une deuxième et d'une troisième résistance (R2, R3), l'autre borne de la deuxième résistance (R2) étant reliée au collecteur de l'interrupteur électronique (T) et l'autre borne de la troisième résistance (R3) étant reliée à la base de l'interrupteur électronique (T), une quatrième résistance (R4) branchée en série avec la troisième résistance (R3) étant reliée à l'autre point d'entrée (B) de la tension d'alimentation (U =) et par l'intermédiaire de celui-ci à l'autre borne de la première résistance (R1) de telle sorte que, lors de l'application d'une tension continue (U =) aux points d'entrée (A, B) de la tension d'alimentation (U =) pour laquelle la base de l'interrupteur électronique (T) est toujours plus positive que l'émetteur et l'interrupteur électronique (T) conduit, la deuxième résistance (R2) se trouve comme résistance de dérivation en parallèle avec la diode luminescente (LED) et il y a à cette deuxième résistance (R2) une chute de tension qui est toujours plus petite que la tension de flux (Uf) de la diode luminescente (LED), et, avec une tension d'alimentation (U =) croissante, le courant qui passe par la première et la deuxième résistance (R1, R2) augmentant, la chute de tension à la deuxième résistance (R2) atteignant donc la grandeur de la tension de flux (Uf) de la diode luminescente (LED) et la diode luminescente commençant donc à briller, une division de courant par la deuxième résistance (R2) et par la diode luminescente (LED) se produisant alors et l'intensité lumineuse de la diode luminescente (LED) étant réduite, et, avec une tension d'alimentation (U =) encore croissante, la base de l'interrupteur électronique (T) devenant plus négative que l'émetteur, l'interrupteur électronique (T) bloquant alors et la diode luminescente (LED) éclairant donc avec toute sa luminosité.

2. Circuit selon la revendication 1, **caractérisé par le fait que**, pour le fonctionnement en tension alternative, il est monté sur l'une des lignes d'amenée de la tension d'alimentation une diode de redressement supplémentaire (D1) qui ne laisse passer le flux de courant de chaque unité (E1 à En) que dans une direction.

Fig.1

Fig.2

Fig.3

Fig. 4

Fig. 5

Fig. 6